# EUROPEAN PATENT APPLICATION

(11) **EP 4 517 299 A1**
(43) Date of publication of application: **05.03.2025**
(21) Application number: 24196528.4
(22) Date of filing: 26.08.2024
(51) Int. Cl.: G01N 21/27, G01N 21/31, G01N 21/47, G01N 21/03

(54) **SPECTROSCOPIC ANALYSIS DEVICE AND SPECTROSCOPIC ANALYSIS METHOD**

(30) Priority: 29.08.2023 JP 2023139270
(71) Applicant: Yokogawa Electric Corporation, Tokyo 180-8750 (JP)
(72) Inventor: HARA, Risa, Tokyo, 180-8750 (JP); SARUYA, Toshiyuki, Tokyo, 180-8750 (JP); MURAYAMA, Kodai, Tokyo, 180-8750 (JP); ISHII, Takeaki, Tokyo, 180-8750 (JP)
(74) Representative: Stöckeler, Ferdinand

(57) **Abstract**

A spectroscopic analysis device (1) according to the present disclosure includes an irradiator (10) configured to irradiate irradiation light on an object to be measured, a light receiver (40) configured to receive reflected light based on the irradiation light from the object to be measured, and a controller (80) configured to analyze, based on the reflected light, an optical property of the object to be measured. The controller (80) is configured to acquire environment information on a measurement environment, including an observation window (W) that guides the irradiation light to the object to be measured, and to correct a parameter indicating the optical property according to the environment information.

## Description

### CROSS-REFERENCE TO RELATED APPLICATION

The present application claims priority to Japanese Patent Application No. 2023-139270 filed on August 29, 2023, the entire contents of which are incorporated herein by reference.

### TECHNICAL FIELD

The present disclosure relates to a spectroscopic analysis device and a spectroscopic analysis method.

### BACKGROUND

Technology for analyzing the optical properties of an object to be measured are known. For example, Patent Literature (PTL) 1 discloses a reflectance calibration method, for a reflectance meter and a reflectance densitometer, that can achieve high measurement accuracy in a short time without stabilizing the irradiation output by feedback control and consequently that does not increase costs or enlarge the measurement device due to stabilization of the irradiation output.

### CITATION LIST

### Patent Literature

PTL 1: JP 5540354 B2

### SUMMARY

However, conventional technology assumes an optical system in which irradiation light from a light source is directly irradiated onto the object to be measured, and in analyzing the optical properties of the object to be measured, the effect of an observation window to guide the irradiation light onto the object to be measured is not considered.

It would be helpful to provide a spectroscopic analysis device and a spectroscopic analysis method that can more accurately analyze the optical properties of an object to be measured by taking into account the effect of an observation window.

A spectroscopic analysis device according to several embodiments includes an irradiator configured to irradiate irradiation light on an object to be measured, a light receiver configured to receive reflected light based on the irradiation light from the object to be measured, and a controller configured to analyze, based on the reflected light, an optical property of the object to be measured, wherein the controller is configured to acquire environment information on a measurement environment, including an observation window that guides the irradiation light to the object to be measured, and to correct a parameter indicating the optical property according to the environment information.

With this configuration, the spectroscopic analysis device can more accurately analyze the optical properties of an object to be measured by taking into account the effect of an observation window. By acquiring environment information on the measurement environment, including an observation window that guides the irradiation light to the object to be measured, and correcting a parameter indicating an optical property according to the environment information, the spectroscopic analysis device can obtain the parameter indicating the optical property of the object to be measured with the effect of the observation window eliminated. The spectroscopic analysis device can correct the parameter indicating the optical property of the object to be measured to the correct value even if a reference material and the object to be measured are measured at different positions from each other.

In the spectroscopic analysis device according to an embodiment, the controller may be configured to construct a conversion model to correct the parameter in the measurement environment to a parameter in a standard environment without the observation window.

With this configuration, the spectroscopic analysis device can convert the parameter indicating the optical property of the object to be measured to the correct value even if a reference material and the object to be measured are measured at different positions from each other. As a result, conversion from the reflectance of light obtained as an optical property to another physical quantity, for example, can be performed accurately. For example, absorbance conversion, Kubelka-Munk conversion, and the like can be performed accurately.

In the spectroscopic analysis device according to an embodiment, the controller may be configured to construct the conversion model using at least one standard material. With this configuration, the spectroscopic analysis device can improve the accuracy of the correction, by the conversion model, of the parameter indicating the optical property of the object to be measured. The spectroscopic analysis device can more accurately correct the parameter indicating the optical property of the object to be measured obtained under the measurement environment to the parameter indicating the optical property under the standard environment.

In the spectroscopic analysis device according to an embodiment, the controller may be configured to construct the conversion model using three or more standard materials that have different optical properties from each other.

With this configuration, the spectroscopic analysis device can also correct a nonlinear relationship for the optical property when correcting, with the conversion model, the parameter indicating the optical property of the object to be measured. Accordingly, the spectroscopic analysis device can improve the accuracy of the correction of the parameter indicating the optical property of the object to be measured. For example, in a case in which an optical property in the standard environment is nonlinear with respect to the optical property in the measurement environment, increasing the number of standard materials can be expected to improve the accuracy of the correction with respect to the parameter indicating the optical property of the object to be measured. Measurement of a plurality of standard materials that have various values of reflectance over a wide range improves the accuracy of the conversion model that is constructed.

In the spectroscopic analysis device according to an embodiment, the controller may be configured to construct the conversion model as a regression model, taking the parameter of the standard material in the measurement environment as an explanatory variable and the parameter of the standard material in the standard environment as an objective variable. With this configuration, the spectroscopic analysis device can easily construct a conversion model with the function of converting the parameter indicating the optical property of the object to be measured in the measurement environment to the parameter indicating the optical property of the object to be measured in the standard environment.

In the spectroscopic analysis device according to an embodiment, the controller may be configured to determine a correction coefficient according to the environment information in constructing the conversion model. With this configuration, the spectroscopic analysis device can use a simpler arithmetic expression to perform the correction process when converting the parameter indicating the optical property of the object to be measured in the measurement environment to the parameter indicating the optical property of the object to be measured in the standard environment.

In the spectroscopic analysis device according to an embodiment, the controller may be configured to correct the parameter of the object to be measured by referring to the conversion model associated with the observation window from among conversion models constructed for each type of the observation window.

With this configuration, the spectroscopic analysis device can more accurately correct the parameter indicating the optical property of the object to be measured in accordance with the observation window that is being used in real time when measuring the optical property of the object to be measured. The spectroscopic analysis device can more accurately correct the parameter indicating the optical property of the object to be measured using the optimal conversion model for the observation window currently in use.

In the spectroscopic analysis device according to an embodiment, when evaluating the conversion model, the controller may be configured to notify a user to update the conversion model upon determining that an evaluation index of the conversion model has reached a threshold.

With this configuration, the spectroscopic analysis device can prompt the user to reconstruct the conversion model in a case in which the conversion model is not functioning accurately because, for example, the corrected parameter indicating the optical property of the object to be measured still exhibits an abnormal value. The user can also cause the spectroscopic analysis device to execute a series of processes related to the construction of the conversion model again so that a conversion model with low accuracy is updated to a conversion model with high accuracy.

In the spectroscopic analysis device according to an embodiment, the controller may be configured to execute processing to update the conversion model. With this configuration, the spectroscopic analysis device can maintain good accuracy of the conversion model.

A spectroscopic analysis method according to several embodiments includes irradiating irradiation light on an object to be measured, receiving reflected light based on the irradiation light from the object to be measured, and analyzing, based on the reflected light, an optical property of the object to be measured, wherein in the analyzing of the optical property, a parameter indicating the optical property is corrected according to environment information on a measurement environment including an observation window that guides the irradiation light to the object to be measured.

A spectroscopic analysis device that performs the spectroscopic analysis method can thereby more accurately analyze the optical property of an object to be measured by taking into account the effect of an observation window. By acquiring environment information on the measurement environment, including an observation window that guides the irradiation light to the object to be measured, and correcting the parameter indicating the optical property according to the environment information, the spectroscopic analysis device can obtain the parameter indicating the optical property of the object to be measured with the effect of the observation window eliminated. The spectroscopic analysis device can correct the parameter indicating the optical property of the object to be measured to the correct value even if a reference material and the object to be measured are measured at different positions from each other.

According to the present disclosure, a spectroscopic analysis device and a spectroscopic analysis method that can more accurately analyze the optical properties of an object to be measured by taking into account the effect of an observation window can be provided.

### BRIEF DESCRIPTION OF THE DRAWINGS

In the accompanying drawings:
FIG. 1 is a schematic diagram illustrating an example configuration of a spectroscopic analysis device according to an embodiment of the present disclosure;
FIG. 2 is a flowchart illustrating a first example of operations of the spectroscopic analysis device in FIG. 1;
FIG. 3 is a flowchart illustrating a second example of operations of the spectroscopic analysis device in FIG. 1;
FIG. 4 is a flowchart illustrating a third example of operations of the spectroscopic analysis device in FIG. 1;
FIG. 5 is a flowchart illustrating a fourth example of operations of the spectroscopic analysis device in FIG. 1;
FIGS. 6A and 6B are schematic diagrams illustrating an example of an optical property of standard materials;
FIGS. 7A and 7B are schematic diagrams illustrating an example of an optical property of an object to be measured; and
FIGS. 8A and 8B are schematic diagrams illustrating an example of the absorbance of an object to be measured.

### DETAILED DESCRIPTION

The background and problems with conventional technology are described in greater detail.

In the method for measuring reflectance and reflectance density with a calibration function, described in PTL 1, two types of reflectance reference plates for calibration with known reflectance are used. The I-S characteristics, i.e., the reflected light amount sensor output value S corresponding to the irradiation light amount I, for each plate are measured in advance. The relationship between the a, b values of the relational expression S = aR + b and the variation factor is ascertained, and the I-a, b characteristics and S-a, b characteristics, which are causal relationships, are stored in memory. During calibration, the irradiation light amount I0 at that time is detected, and accurate values for a, b during calibration based on the two types of reflectance reference plates for calibration are identified from the value of I0 and the stored causal relationships. Consequently, the relational expression S = aR + b holds.

Next, the reflected light amount sensor output value S for the object to be measured is measured. The reflectance R is calculated from the formula R = S/a - b/a. Alternatively, the value of the reflectance R is used to calculate the reflectance density D = -log₁₀R.

However, the conventional technology described in PTL 1 assumes an optical system in which irradiation light from a light source is directly irradiated onto an object to be measured. In this conventional technology, the effect of the observation window used to guide the irradiation light from the light source to the object to be measured, which is located inside a sample chamber, is not taken into consideration in analyzing the optical properties of the object to be measured. In addition, use of different observation windows and changes to the measurement environment, such as the material and thickness of the observation window, were not anticipated.

In the aforementioned conventional technology, the linear relationship S = aR + b is established between the reflectance R and the reflected light amount sensor output value S. However, in cases in which it is necessary to correct a nonlinear relationship for the reflectance R, three or more types of reflectance reference plates have to be used. The aforementioned conventional technology also did not take into account the wavelength dependence of light in the correction formula.

Embodiments of the present disclosure are mainly described below with reference to the drawings.

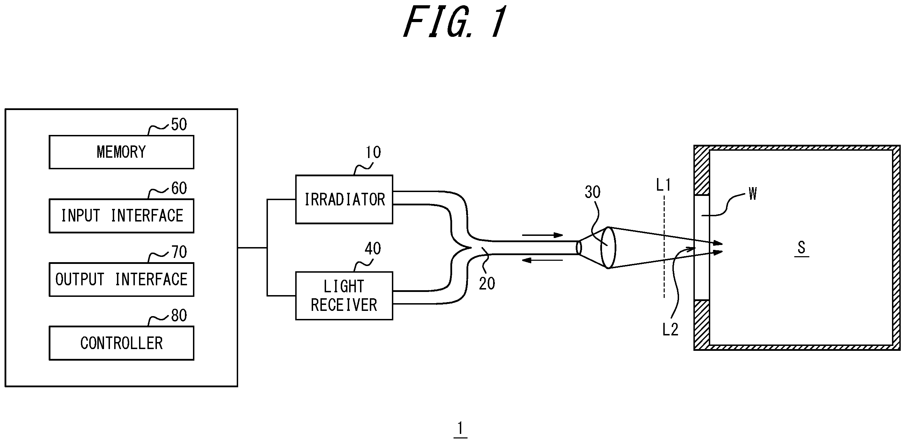

FIG. 1 is a schematic diagram illustrating an example configuration of a spectroscopic analysis device 1 according to an embodiment of the present disclosure. With reference to FIG. 1, an example of the configuration and functions of the spectroscopic analysis device 1 is mainly described.

The spectroscopic analysis device 1 according to an embodiment analyzes the optical properties of an object to be measured, which is located inside a sample chamber S. In greater detail, the spectroscopic analysis device 1 irradiates irradiation light onto the object to be measured through an observation window W located in the sample chamber S. The spectroscopic analysis device 1 receives reflected light based on the irradiation light from the object to be measured. Based on the received reflected light, the spectroscopic analysis device 1 analyzes an optical property of the object to be measured.

In the present disclosure, examples of the "sample chamber S" include any space that has the function of storing or transporting an object to be measured. The sample chamber S is configured by a tank and piping or the like. The "observation window W" includes, for example, any window having the function of transmitting (allowing to pass therethrough) light at the wavelength of the irradiation light used by the spectroscopic analysis device 1 for optical analysis of the optical properties of the object to be measured, which is located inside the sample chamber S. The observation window W is formed by a material such as acrylic resin, glass, sapphire, or diamond. The observation window W may have a thickness of 10 mm or more to ensure sufficiently high impact resistance, pressure resistance, and the like.

The "object to be measured" may be any object, such as a solid, a liquid, or a slurries. Examples of the object to be measured include an object such that diffuse reflection occurs when the spectroscopic analysis device 1 analyzes the optical property of the object to be measured using a diffuse reflection method. Examples of the "optical property" include properties such as the wavelength dependence of the reflectance of light. As one example, the spectroscopic analysis device 1 analyzes the reflectance spectrum of light at the object to be measured based on the diffuse reflectance method.

The spectroscopic analysis device 1 includes an irradiator 10, a light guide 20, a light collector 30, a light receiver 40, a memory 50, an input interface 60, an output interface 70, and a controller 80.

The irradiator 10 has a light source such as a lamp, a light emitting diode (LED), or a semiconductor laser. Examples of the lamp include halogen lamps, tungsten lamps, and xenon lamps. The irradiator 10 irradiates irradiation light having wavelengths that match the optical properties of the object to be measured that is to be analyzed using the spectroscopic analysis device 1. The wavelengths of the irradiation light irradiated by the irradiator 10 include, for example, the wavelength at which the irradiation light is reflected by the object to be measured. The wavelengths of the irradiation light include, for example, wavelengths in the ultraviolet region, visible region, near-infrared region, and other infrared regions.

The light guide 20 includes any optical elements for guiding light. Examples of the optical elements include optical fibers, optical couplers, and mirrors. The light guide 20 guides the irradiation light irradiated from the light source of the irradiator 10 to the light collector 30. The light guide 20 guides the irradiation light through the light collector 30 and the observation window W to the object to be measured, which is located inside the sample chamber S. The light guide 20 accepts the reflected light from the object to be measured, which is located inside the sample chamber S, through the observation window W and the light collector 30. The light guide 20 guides the accepted reflected light from the object to be measured to the light receiver 40. The light guide 20 has the function of guiding the irradiation light from the irradiator 10 to the object to be measured and the function of guiding the reflected light from the object to be measured to the light receiver 40.

The light collector 30 includes any optical elements for collecting light. Examples of the optical elements include optical lenses and integrating spheres. The light collector 30 collects the irradiation light from the irradiator 10 guided by the light guide 20 and efficiently irradiates the light to the object to be measured, which is located inside the sample chamber S. The light collector 30 efficiently collects the reflected light from the object to be measured, which is emitted from the sample chamber S through the observation window W, at the light guide 20.

The light receiver 40 has a photodetector including a light receiving element such as a photodiode. The light receiver 40 receives reflected light, which is based on the irradiation light irradiated by the irradiator 10 to the object to be measured and indicates an optical property of the object to be measured. The photodetector of the light receiver 40 receives the reflected light, from the object to be measured, guided by the light collector 30 and the light guide 20, converts the reflected light into an electric signal, and outputs the electric signal to the controller 80 or the like. The wavelength band that can be received by the photodetector of the light receiver 40 includes the wavelength band of the reflected light. The photodetector of the light receiver 40 has detection sensitivity at the wavelengths of the reflected light. The light receiver 40 has the function of detecting the intensity of the reflected light. Additionally, the light receiver 40 may further have spectral functions such as diffraction gratings, interferometers, and filters.

The memory 50 includes any storage device, such as a hard disk drive (HDD), a solid state drive (SSD), an electrically erasable programmable read-only memory (EEPROM), a read-only memory (ROM), and a random access memory (RAM). The memory 50 stores information necessary to realize the operations of the spectroscopic analysis device 1. The memory 50 stores information obtained by operations of the spectroscopic analysis device 1. For example, the memory 50 stores system programs, application programs, and various data acquired by any means such as communication.

The memory 50 may function as a main storage apparatus, an auxiliary storage apparatus, or a cache memory. The memory 50 is not limited to being internal to the spectroscopic analysis device 1 and may include an external memory apparatus connected through a digital input/output port or the like, such as universal serial bus (USB).

The input interface 60 includes one or more interfaces for input to detect user input and acquire input information based on user operations. The input interface may be a physical key, a capacitive key, a touchscreen provided integrally with a display of the output interface 70, an imaging module such as a camera, a microphone that receives audio input, or the like.

The output interface 70 includes one or more interfaces for output to output information and notify the user. The output interfaces include a display that outputs information as images, a speaker that outputs information as sound, a vibrator that outputs information as vibration, and the like. Examples of the display include a liquid crystal display (LCD) and an organic electro luminescence (EL) display.

The controller 80 includes one or more processors. In the present disclosure, the "processor" is a general purpose processor or a dedicated processor specialized for particular processing, but these examples are not limiting. Examples of the controller 80 include a central processing unit (CPU). The controller 80 is communicably connected with each component of the spectroscopic analysis device 1 and controls operations of the spectroscopic analysis device 1 overall. The controller 80 analyzes an optical property of the object to be measured based on the reflected light received by the light receiver 40. In addition to such analysis processing, the controller 80 performs various arithmetic operations, such as processing to correct a parameter indicating the optical property, as described below.

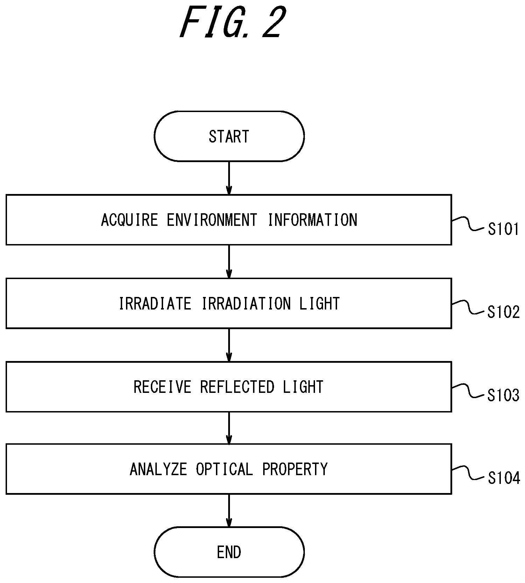

FIG. 2 is a flowchart illustrating a first example of operations of the spectroscopic analysis device 1 in FIG. 1. With reference to FIG. 2, an example of a spectroscopic analysis method performed by the spectroscopic analysis device 1 in FIG. 1 is mainly described. The flowchart illustrated in FIG. 2 illustrates an example of the basic process flow when the controller 80 of the spectroscopic analysis device 1 analyzes an optical property of the object to be measured.

In step S101, the controller 80 of the spectroscopic analysis device 1 acquires environment information on the measurement environment including the observation window W that guides the irradiation light from the irradiator 10 from outside the sample chamber S to the object to be measured on the inside. For example, the controller 80 acquires the environment information as input information inputted by the user using the input interface 60 of the spectroscopic analysis device 1.

In the present disclosure, the "environment information" includes the type of observation window W. For example, different types of observation windows W are defined as those that differ from each other in surface roughness, thickness, composition, and the like of the observation window W. For example, observation windows W manufactured by the same manufacturer using the same manufacturing method and numbered 1, 2, ... by a worker are referred to as types. The environment information may also include the focal length of the light collector 30, the wavelength of the irradiation light emitted from the irradiator 10, and the measurement position at which the object to be measured is located inside the sample chamber S. The "measurement environment" includes, for example, the environment inside and surrounding the sample chamber S in which the object to be measured is placed when the spectroscopic analysis device 1 is to analyze an optical property of the object to be measured.

In step S102, the controller 80 of the spectroscopic analysis device 1 controls the irradiator 10 so that the irradiator 10 irradiates irradiation light on the object to be measured.

In step S103, the controller 80 of the spectroscopic analysis device 1 causes the light receiver 40 to receive the reflected light, which is based on the irradiation light irradiated in step S 102 and indicates the optical property of the object to be measured.

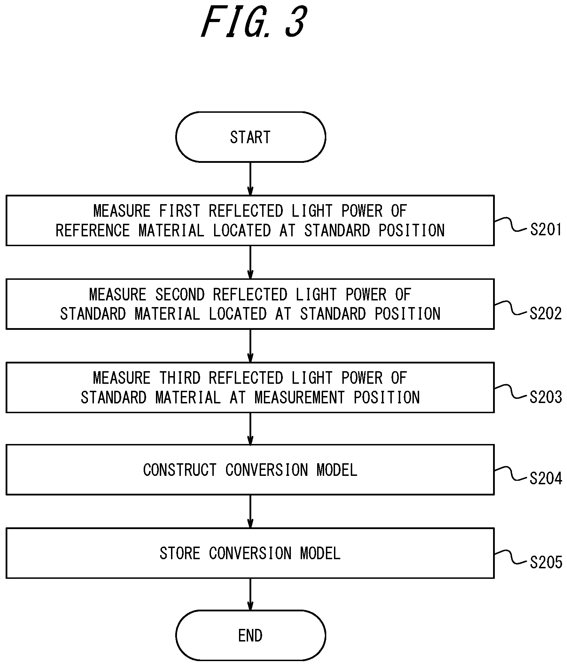

In step S104, the controller 80 of the spectroscopic analysis device 1 analyzes the optical property of the object to be measured based on the reflected light received in step S103. In the step of analyzing the optical property in step S104, the controller 80 corrects a parameter indicating the optical property of the object to be measured, according to the environment information acquired in step S101. For example, the controller 80 uses a conversion model, described below with reference to FIG. 3, to correct the parameter, indicating the optical property of the object to be measured, actually measured in the measurement environment to a parameter, indicating the optical property of the object to be measured, in a standard environment without the observation window W. In the present disclosure, the "standard environment" includes, for example, an environment outside the sample chamber S that is not affected by the measurement environment. The "parameter indicating the optical property" includes at least one of the value of the reflectance or absorbance of light for each wavelength, the reflected light power, or the like. Examples of the "reflected light power" include the power of the light after it is reflected by a predetermined object.

FIG. 3 is a flowchart illustrating a second example of operations of the spectroscopic analysis device 1 in FIG. 1. The flowchart in FIG. 3 illustrates an example of the process flow when the conversion model used in step S 104 in FIG. 2 is constructed in advance before analysis of the optical property of the object to be measured.

In step S201, the controller 80 of the spectroscopic analysis device 1 uses the light receiver 40 to measure a first reflected light power P1 at a reference material located at a standard position.

In the present disclosure, the "standard position" includes, for example, a predetermined position in a standard environment. As illustrated in FIG. 1, standard positions include, for example, a position L1 between the light collector 30 of the spectroscopic analysis device 1 and the observation window W, a position L2 on an outer surface located outside the sample chamber S at the observation window W, and the like. The "reference material" includes any material that has a reflectance of light of substantially 100%. Examples of the reference material include a standard white plate, barium sulfate, a gold mirror, and the like, which have the function of light reflection with high reflectance.

For example, the reference material may be positioned at the position L1 by being attached to the tip of the observation window W side of a cylindrical outer frame that covers the optical path in the spectroscopic analysis device 1 from the tip of the light guide 20 to the light collector 30. The standard material may also positioned at the position L1 by being attached to any other optical mount. The reference material may be positioned at the position L2 by being fixed in any manner to the outer surface of the observation window W.

In step S202, the controller 80 of the spectroscopic analysis device 1 uses the light receiver 40 to measure a second reflected light power P2 at a standard material located at the standard position. In the present disclosure, the "standard material" includes a material that has the function of light reflection at any reflectance. The standard material may include a solid, such as a standard reflector, or a fluid, such as a liquid.

The controller 80 measures the second reflected light power P2 for each of a plurality of standard materials that have different optical properties from each other. The plurality of standard materials include materials having various values of reflectance so as to encompass a range of reflectance that can be taken by the object to be measured, from materials that exhibit somewhat high reflectance of light to materials that reflect almost no light. A possible method of measuring the second reflected light power P2 for the plurality of standard materials is to arrange the plurality of standard materials with different values reflectance on a disk and rotate the disk to change the standard material that is positioned along the optical path.

In step S203, the controller 80 of the spectroscopic analysis device 1 uses the light receiver 40 to measure a third reflected light power P3 at the standard material at a measurement position at which the object to be measured is placed inside the sample chamber S. In measuring the first reflected light power P1, the second reflected light power P2, and the third reflected light power P3, the controller 80 adjusts the output of the irradiator 10 so that the light power immediately after the irradiation light is irradiated from the irradiator 10 and emitted from the light guide 20 is identical in each case. The same plurality of standard materials used in step S202 is used in step S203.

The process in step S203 is performed using the sample chamber S and the observation window W before storing or transporting the object to be measured, or is performed using a simulated measurement environment that mimics the arrangement of the sample chamber S and the observation window W when the object to be measured is stored or transported. For example, the standard material may be a solid object, such as a standard reflector, that is placed at the measurement position by being pressed against the observation window W inside the sample chamber S or by being separated from the observation window W inside the sample chamber S and fixed by any method. Alternatively, the standard material may be a fluid, such as a liquid, that fills the interior of the sample chamber S so as to be placed at the measurement position.

The processing in step S203 is performed according to the type of observation window W. That is, when the analysis of the optical property of the object to be measured is performed for a plurality of observation windows W whose characteristics differ from each other, the processing in step S203 is performed for each of the observation windows W.

In step S204, the controller 80 of the spectroscopic analysis device 1 constructs a conversion model to correct the parameter indicating the optical property of the object to be measured in the measurement environment to the parameter indicating the optical property of the object to be measured in the standard environment without the observation window W.

For example, the controller 80 constructs a conversion model using the plurality of standard materials, which were used in steps S202 and S203, that have different optical properties from each other. For example, the controller 80 constructs a conversion model using three or more standard materials. The controller 80 constructs the conversion model as a regression model, taking the parameter indicating the optical property of the reference material in the measurement environment as an explanatory variable and the parameter indicating the optical property of the standard material in the standard environment as an objective variable.

For example, the controller 80 calculates the reflectance P2/P1 at the standard material at the standard position by dividing the second reflected light power P2 by the first reflected light power P1. The controller 80 calculates the reflectance P3/P1 at the standard material at the measurement position by dividing the third reflected light power P3 by the first reflected light power P1. The controller 80 constructs a conversion model to convert the reflectance P3/P1 to the reflectance P2/P1. The controller 80 constructs a conversion model, such as a linear regression model or a nonlinear regression model, taking the reflectance P3/P1 as the explanatory variable and the reflectance P2/P1 as the objective variable.

In constructing the conversion model, the controller 80 determines the correction coefficient according to the environment information. That is, the controller 80 constructs a conversion model for each of the observation windows W in the same manner as in the processing in step S203 and determines the correction coefficient corresponding to the observation window W.

In step S205, the controller 80 of the spectroscopic analysis device 1 stores the conversion models constructed in step S204 in the memory 50. The controller 80 stores, in the memory 50, a database generated by associating the conversion models constructed for each type of observation window W with the corresponding observation windows W.

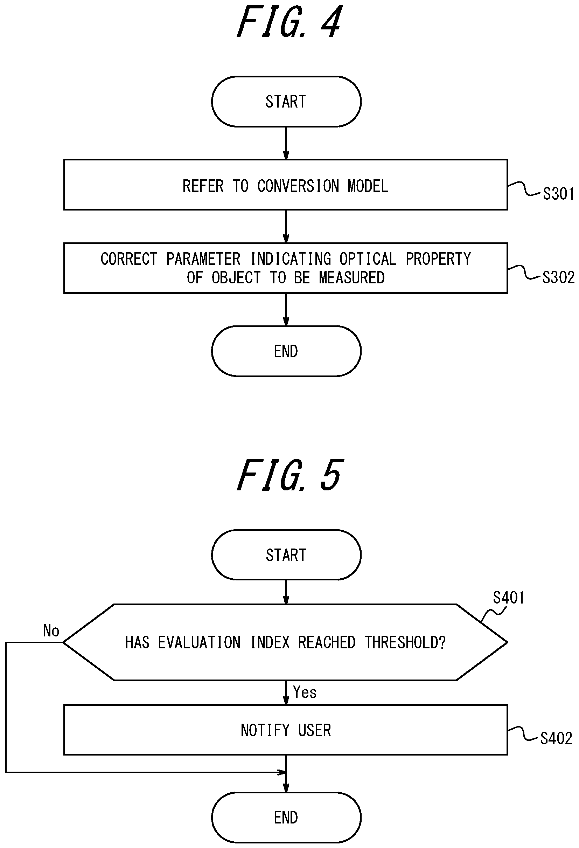

FIG. 4 is a flowchart illustrating a third example of operations of the spectroscopic analysis device 1 in FIG. 1. The flowchart illustrated in FIG. 4 is an example of a further subdivision of the processing in step S104 of the flowchart illustrated in FIG. 2.

In step S301, the controller 80 of the spectroscopic analysis device 1 refers to the database related to the conversion models stored in the memory 50 in step S205 in FIG. 3 within the step of analyzing the optical property of the object to be measured. For example, from among the conversion models constructed for each type of observation window W in step S204 in FIG. 3, the controller 80 refers to the conversion model associated with the observation window W identified by the user as environment information using the input interface 60 in step S101 in FIG. 2.

In step S302, the controller 80 of the spectroscopic analysis device 1 uses the conversion model referred to in step S301 to correct the parameter indicating the optical property of the object to be measured. For example, the controller 80 uses the light receiver 40 to measure the fourth reflected light power P4 at the object to be measured at the measurement position, using the same measurement environment as used in step S203 in FIG. 3. The controller 80 calculates the reflectance P4/P1 at the object to be measured at the measurement position by dividing the fourth reflected light power P4 by the first reflected light power P1. The first reflected light power P1 used here is not measured in the process of constructing the conversion model illustrated in the flowchart in FIG. 3, but is measured using a reference material at the standard position when the controller 80 of the spectroscopic analysis device 1 analyzes the optical property of the object to be measured.

By applying the conversion model referred to in step S301 to the reflectance P4/P1, the controller 80 corrects the reflectance P4/P1 to a parameter indicating the optical property of the object to be measured in the standard environment without the observation window W. For example, by applying a correction coefficient corresponding to the observation window W to the reflectance P4/P1, the controller 80 corrects the reflectance P4/P1 to a parameter indicating the optical property of the object to be measured in the standard environment without the observation window W.

FIG. 5 is a flowchart illustrating a fourth example of operations of the spectroscopic analysis device 1 in FIG. 1. The flowchart in FIG. 5 illustrates the flow of processing related to the evaluation of the conversion model stored in the memory 50 in step S205 of FIG. 3.

In step S401, the controller 80 of the spectroscopic analysis device 1 determines whether an evaluation index of the conversion model stored in the memory 50 in step S205 of FIG. 3 has reached a threshold. When determining that the evaluation index has reached the threshold, the controller 80 executes the process of step S402. When determining that the evaluation index has not reached the threshold, the controller 80 terminates the process.

In the present disclosure, the "evaluation index" may, for example, include an index for evaluating the regression model, such as the mean squared error (MSE), root mean squared error (RMSE), mean absolute error (MAE), or R², or may include the parameter itself that indicates the optical property of the object to be measured after correction by the conversion model.

In step S402, the controller 80 of the spectroscopic analysis device 1 notifies the user to update the conversion model upon determining that the evaluation index has reached the threshold in step S401. For example, the controller 80 notifies the user using the output interface 70 to update a conversion model with a low evaluation according to the evaluation index and low accuracy to a conversion model with high accuracy. Upon confirming the notification outputted from the output interface 70, the user causes the spectroscopic analysis device 1 to execute a series of processes related to the construction of the conversion model again according to the flowchart in FIG. 3. As a result, the controller 80 of the spectroscopic analysis device 1 executes a process for updating the conversion model.

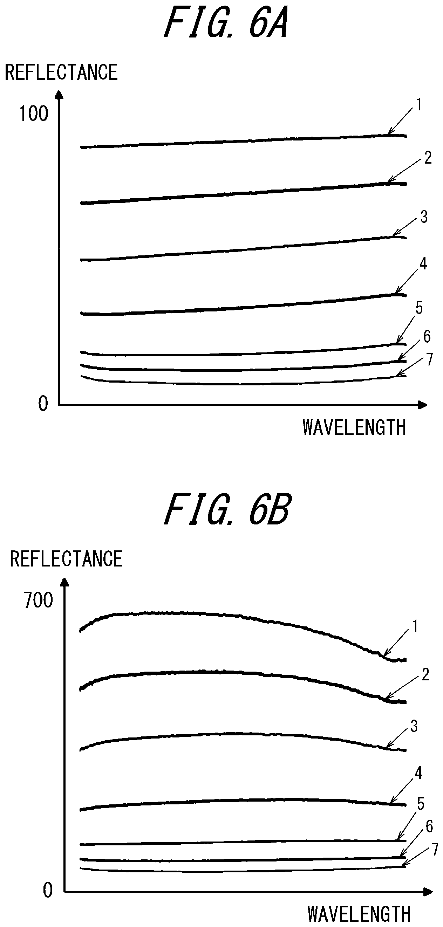

With reference to FIGS. 6A through 8B, an example of an optical property of standard materials obtained when constructing a conversion model according to the flowchart in FIG. 3 is now described. Similarly, an example of the optical property of the object to be measured, and the corresponding absorbance of the object to be measured, before and after correction by the conversion model according to the flowchart in FIG. 4 is also described. The wavelength dependence of the reflectance of light is illustrated below as an example of the optical property.

FIGS. 6A and 6B are schematic diagrams illustrating an example of an optical property of standard materials. FIGS. 6A and 6B illustrate an example of an optical property of standard materials obtained when constructing a conversion model according to the flowchart in FIG. 3. FIG. 6A illustrates the wavelength dependence of the reflectance of light (P2/P1 × 100) at a standard position for a plurality of standard materials. Numbers 1 to 7 are assigned to the graphs corresponding to each of the standard materials. FIG. 6B illustrates the wavelength dependence of the reflectance of light (P3/P1 × 100) at a measurement position for the plurality of standard materials. Numbers 1 to 7 are similarly assigned to the graphs corresponding to FIG. 6A.

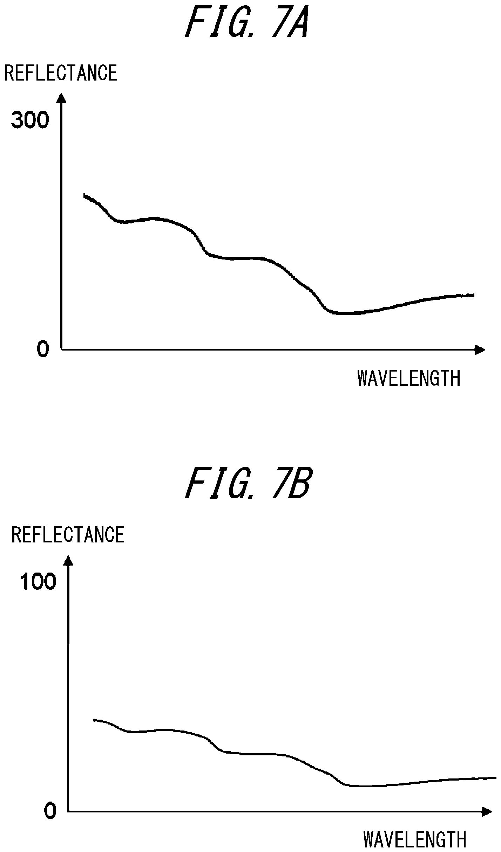

FIGS. 7A and 7B are schematic diagrams illustrating an example of an optical property of an object to be measured. FIGS. 7A and 7B illustrate an example of an optical property of the object to be measured before and after correction by the conversion model according to the flowchart illustrated in FIG. 4. FIG. 7A illustrates the wavelength dependence of the reflectance of light (P4/P1 × 100) before correction by the conversion model. FIG. 7B illustrates the wavelength dependence of the reflectance of light after correction by the conversion model.

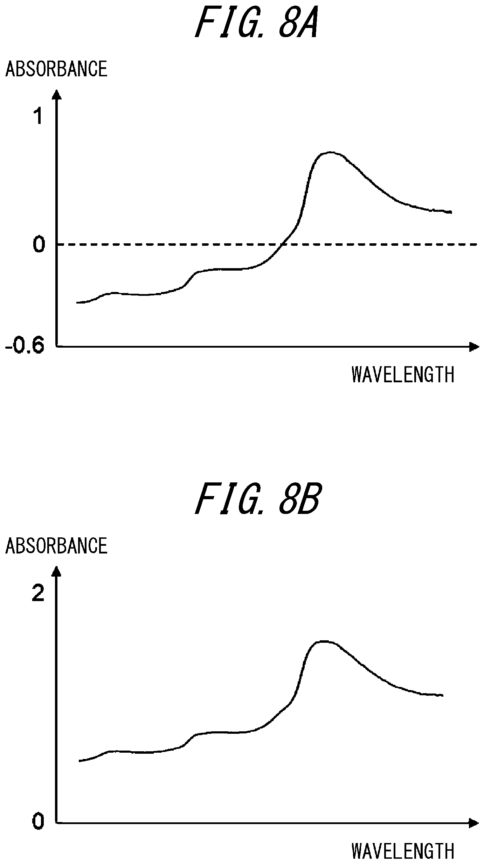

FIGS. 8A and 8B are schematic diagrams illustrating an example of the absorbance of an object to be measured. FIG. 8A illustrates the absorbance spectrum corresponding to the reflectance spectrum of FIG. 7A. FIG. 8B illustrates the absorbance spectrum corresponding to the reflectance spectrum of FIG. 7B.

As described above, the reflectance of light is calculated by dividing the fourth reflected light power P4 at the object to be measured by the first reflected light power P1 at the reference material whose reflectance is known. If the reference material and the object to be measured are placed in the same position as each other, the same environment is obtained. Therefore, the correct value of the reflectance of light is obtained.

It is not easy, however, to place the reference material in the same position as the object to be measured once the process has started, as this may involve line cleaning and line disassembly. Therefore, as periodic calibration, it is necessary to measure the reference material at a different position from the object to be measured. For example, it is assumed that the object to be measured is inside the sample chamber S and the reference material is at position L1 outside the sample chamber S.

The reflectance of light at the object to be measured might not exhibit the correct value because of a different environment, such as the position relative to the focus of the light collector 30 and the presence or absence of the observation window W. For example, as illustrated in FIG. 7A, the reflectance of light may exhibit a value of 100% or more. This may result in problems during absorbance conversion, Kubelka-Munk conversion, and the like, and correct values might not be obtained. For example, as illustrated in FIG. 8A, the absorbance of the object to be measured may exhibit a negative value. In addition, if the measurement environment is changed by a change to a different observation window W, the reflectance spectrum obtained as the optical property of the object to be measured also changes, making it difficult to compare measured values related to the optical property of the object to be measured.

As described above, the difference in the environment, including the optical path, between the measurement for the reference material and the measurement for the object to be measured generates anomalous values for the spectrum in the optical property. Such anomalous values are resolved by a conversion model constructed using standard materials according to the flowchart illustrated in FIG. 3. At this time, as described above, in step S203 of FIG. 3, the sample chamber S and the observation window W before storing or transporting the object to be measured are used, or a simulated measurement environment that mimics the arrangement of the sample chamber S and the observation window W when the object to be measured is stored or transported is used. By correction for differences in the environment based on the aforementioned conversion model, the correct values for the spectrum in the optical property are obtained.

For example, a plurality of standard materials with the optical properties illustrated in FIGS. 6A and 6B are used to construct the conversion model. As illustrated in FIG. 6A, when the optical property of the standard material is measured at the same standard position as the reference material, the light reflectance exhibits the correct value. On the other hand, when the optical property of the standard material is measured at a measurement position different from the standard position, as illustrated in FIG. 6B, an abnormal value is generated for the same reason as above. The controller 80 of the spectroscopic analysis device 1 constructs a conversion model, such as a linear regression model or a nonlinear regression model, taking the reflectance P3/P1 illustrated in FIG. 6B as the explanatory variable and the reflectance P2/P1 illustrated in FIG. 6A as the objective variable.

When the parameter indicating the optical property of the object to be measured, as illustrated in FIG. 7A, is corrected by the constructed conversion model, the light reflectance exhibits a normal, correct value that is equal to or less than 100%, as illustrated in FIG. 7B. Correspondingly, as illustrated in FIG. 8B, the absorbance of the object to be measured becomes positive and exhibits a normal, correct value.

The spectroscopic analysis device 1 according to the above embodiment can more accurately analyze the optical properties of an object to be measured by taking into account the effect of an observation window W. By acquiring environment information on the measurement environment, including the observation window W that guides the irradiation light to the object to be measured, and correcting a parameter indicating an optical property according to the environment information, the spectroscopic analysis device 1 can obtain the parameter indicating the optical property of the object to be measured with the effect of the observation window W eliminated. The spectroscopic analysis device 1 can correct the parameter indicating the optical property of the object to be measured to the correct value even if a reference material and the object to be measured are measured at different positions from each other.

In addition, even in a case of measuring the optical property of the object to be measured after a change in the measurement environment, such as the observation window W, the spectroscopic analysis device 1 can correct the signal value obtained for the optical property in each different measurement environment to match the standard environment. Therefore, the spectroscopic analysis device 1 can easily compare signal values under the same standard environment, a comparison which would normally not be easy due to differing measurement environments.

The spectroscopic analysis device 1 constructs a conversion model to correct the parameter indicating the optical property of the object to be measured in the measurement environment to the parameter indicating the optical property of the object to be measured in the standard environment without the observation window W. With this configuration, the spectroscopic analysis device 1 can convert the parameter indicating the optical property of the object to be measured to the correct value even if a reference material and the object to be measured are measured at different positions from each other. As a result, conversion from the reflectance of light obtained as an optical property to another physical quantity, for example, can be performed accurately. For example, absorbance conversion, Kubelka-Munk conversion, and the like can be performed accurately.

By constructing the conversion model using at least one standard material, the spectroscopic analysis device 1 can improve the accuracy of the correction, by the conversion model, of the parameter indicating the optical property of the object to be measured. The spectroscopic analysis device 1 can more accurately correct the parameter indicating the optical property of the object to be measured obtained under the measurement environment to the parameter indicating the optical property under the standard environment.

By constructing the conversion model using three or more standard materials that have different optical properties from each other, the spectroscopic analysis device 1 can also correct a nonlinear relationship for the optical property when correcting, with the conversion model, the parameter indicating the optical property of the object to be measured. The spectroscopic analysis device 1 can thereby improve the accuracy of the correction of the parameter indicating the optical property of the object to be measured. For example, in a case in which an optical property in the standard environment is nonlinear with respect to the optical property in the measurement environment, increasing the number of standard materials can be expected to improve the accuracy of the correction with respect to the parameter indicating the optical property of the object to be measured. Measurement of a plurality of standard materials that have various values of reflectance over a wide range improves the accuracy of the conversion model that is constructed.

The spectroscopic analysis device 1 constructs the conversion model as a regression model, taking the parameter indicating the optical property of the reference material in the measurement environment as an explanatory variable and the parameter indicating the optical property of the standard material in the standard environment as an objective variable. With this configuration, the spectroscopic analysis device 1 can easily construct a conversion model with the function of converting the parameter indicating the optical property of the object to be measured in the measurement environment to the parameter indicating the optical property of the object to be measured in the standard environment.

In constructing the conversion model, the spectroscopic analysis device 1 determines the correction coefficient according to the environment information. With this configuration, the spectroscopic analysis device 1 can use a simpler arithmetic expression to perform the correction process when converting the parameter indicating the optical property of the object to be measured in the measurement environment to the parameter indicating the optical property of the object to be measured in the standard environment.

The spectroscopic analysis device 1 refers to the conversion model associated with the observation window W from among the conversion models constructed for each type of observation window W and corrects the parameter indicating the optical property of the object to be measured. With this configuration, the spectroscopic analysis device 1 can more accurately correct the parameter indicating the optical property of the object to be measured in accordance with the observation window W that is being used in real time when measuring the optical property of the object to be measured. The spectroscopic analysis device 1 can more accurately correct the parameter indicating the optical property of the object to be measured using the optimal conversion model for the observation window W currently in use.

The spectroscopic analysis device 1 notifies the user to update the conversion model upon determining that the evaluation index of the conversion model has reached a threshold. With this configuration, the spectroscopic analysis device 1 can prompt the user to reconstruct the conversion model in a case in which the conversion model is not functioning accurately because, for example, the corrected parameter indicating the optical property of the object to be measured still exhibits an abnormal value. The user can also cause the spectroscopic analysis device 1 to execute a series of processes related to the construction of the conversion model again so that a conversion model with low accuracy is updated to a conversion model with high accuracy.

By executing processing to update the conversion model, the spectroscopic analysis device 1 can maintain good accuracy of the conversion model. In addition, by including the wavelength dependence of the optical property on the reflectance of light, the spectroscopic analysis device 1 can establish a wavelength-dependent correction formula for the reflectance of light, thereby improving the accuracy when correcting the parameter indicating the optical property of the object to be measured.

It will be clear to a person of ordinary skill in the art that the present disclosure may be implemented in certain ways other than the above embodiments without departing from the spirit or essential features thereof. Accordingly, the above explanation merely provides examples that are in no way limiting. The scope of the present disclosure is to be defined by the appended claims, not by the above explanation. Among all changes, various changes that are within the range of equivalents are considered to be included therein.

For example, the shape, pattern, size, arrangement, orientation, type, number, and the like of the above-described components are not limited to the above explanation or the drawings. The shape, pattern, size, arrangement, orientation, type, number, and the like of each component may be selected freely as long as the functions of the component can be achieved. The constituent elements of the spectroscopic analysis device 1 in the drawings are illustrated as functional concepts, and the specific form of each constituent element is not limited to the form in the drawings.

The functions or the like included in the various components or steps may be reordered in any logically consistent way. Furthermore, components or steps may be combined into one or divided.

For example, a general purpose electronic device, such as a smartphone or a computer, can also be caused to function as the spectroscopic analysis device 1 according to the above embodiment. Specifically, a program describing the processing content for realizing the functions of the spectroscopic analysis device 1 according to an embodiment is stored in a memory of the electronic device, and the program is read and executed by the processor of the electronic device. Accordingly, the present disclosure can also be embodied as a program executable by a processor.

Alternatively, the present disclosure can also be realized as a non-transitory computer readable medium storing a program executable by one or more processors to cause the spectroscopic analysis device 1 or the like according to an embodiment to execute each function. Such embodiments are also to be understood as falling within the scope of the present disclosure.

In the above embodiment, the spectroscopic analysis device 1 has been described as constructing a conversion model to correct the parameter indicating the optical property of the object to be measured in the measurement environment to the parameter indicating the optical property of the object to be measured in the standard environment without the observation window W, but this configuration is not limiting. The spectroscopic analysis device 1 may execute the process to correct the parameter indicating the optical property of the object to be measured by any other method not based on the construction of a conversion model.

In the above embodiment, the spectroscopic analysis device 1 has been described as constructing the conversion model using a plurality of standard materials that have different optical properties from each other, but this configuration is not limiting. The spectroscopic analysis device 1 may construct a conversion model using only one standard material. For example, if the spectroscopic analysis device 1 can change the optical property of the standard material by changing a condition such as temperature, then a plurality of optical properties that differ from each other can be achieved using only one standard material by changing the condition.

In the above embodiment, the spectroscopic analysis device 1 has been described as constructing the conversion model using three or more standard materials that have different optical properties from each other, but this configuration is not limiting. The spectroscopic analysis device 1 may construct a conversion model using two standard materials that have different optical properties from each other.

In the above embodiment, the spectroscopic analysis device 1 has been described as constructing the conversion model as a regression model, taking the parameter indicating the optical property of the reference material in the measurement environment as an explanatory variable and the parameter indicating the optical property of the standard material in the standard environment as an objective variable, but this configuration is not limiting. The spectroscopic analysis device 1 may construct the conversion model as any other model based on machine learning and other statistical processes or the like.

In constructing the conversion model, the spectroscopic analysis device 1 in the above embodiment has been described as determining the correction coefficient according to the environment information, but this configuration is not limiting. The spectroscopic analysis device 1 may execute the process to correct the parameter indicating the optical property of the object to be measured based on any other correction formula different from the correction formula using a correction coefficient.

The spectroscopic analysis device 1 in the above embodiment has been described as referring to the conversion model associated with the observation window W from among the conversion models constructed for each type of observation window W and correcting the parameter indicating the optical property of the object to be measured, but this configuration is not limiting. The spectroscopic analysis device 1 may automatically identify the observation window W by any other method, instead of or in addition to the input information inputted by the user using the input interface 60, and refer to the optimal conversion model. The spectroscopic analysis device 1 does not need to generate a database associating the conversion models constructed for each type of observation window W with the corresponding observation windows W in the first place. In this case, the spectroscopic analysis device 1 may execute the process to correct the parameter indicating the optical property of the object to be measured using the same conversion model, regardless of the observation window W.

In the above embodiment, the spectroscopic analysis device 1 has been described as notifying the user to update the conversion model upon determining that the evaluation index of the conversion model has reached a threshold, but this configuration is not limiting. The spectroscopic analysis device 1 need not execute such determination and notification processing. Accordingly, the spectroscopic analysis device 1 need not execute the processing to update the conversion model.

In the above embodiment, the optical property has been described as including the wavelength dependence on the reflectance of light, but this configuration is not limiting. The optical property may include the reflectance of light at a specific wavelength, instead of including wavelength dependence as in the reflectance spectrum. The optical property may include any other properties related to the absorption, transmission, and scattering of light, instead of or in addition to properties related to the reflection of light. For example, the optical property may include the wavelength dependence of absorption, transmission, or scattering coefficients of light, or may include the absorption, transmission, or scattering coefficients of light at a particular wavelength.

In the above embodiment, the spectroscopic analysis device 1 has been described as acquiring the environment information as input information inputted by the user using the input interface 60, but this configuration is not limiting. The spectroscopic analysis device 1 may acquire the environment information by any other method. For example, the spectroscopic analysis device 1 acquires the product model name of an optical probe that is attached to the light guide 20 and includes the light collector 30 as information inputted by the user using the input interface 60. Based on the acquired product model name, the spectroscopic analysis device 1 may refer to the corresponding product information, for the optical probe, stored in advance in the memory 50 and may acquire the environment information based on the product information. Alternatively, based on the acquired product model name, the spectroscopic analysis device 1 may acquire the corresponding product information, for the optical probe, by any method such as communication and may acquire the environment information based on the product information.

In the above embodiment, the standard position has been described as including, for example, a position L1 between the light collector 30 of the spectroscopic analysis device 1 and the observation window W and a position L2 on an outer surface located outside the sample chamber S at the observation window W, but this configuration is not limiting. The standard position may include any other position that a portion of the irradiation light can reach after the optical path of the irradiation light is branched in the light guide 20.

In the above embodiment, the spectroscopic analysis device 1 has been described as executing the processing of step S202 in the flowchart illustrated in FIG. 3, but this configuration is not limiting. The spectroscopic analysis device 1 may omit the processing in step S202 if the reflectance of light at the standard material is known and may construct the conversion model using the known reflectance as the objective variable.

In the above embodiment, the spectroscopic analysis device 1 has been described as constructing the conversion model for converting the reflectance P3/P1 to the reflectance P2/P1, but this configuration is not limiting. The spectroscopic analysis device 1 may construct a conversion model to convert the third reflected light power P3 to the second reflected light power P2.

Some embodiments of the present disclosure are exemplified below. It should be noted that the embodiments of the present disclosure are not, however, limited to these examples.
[Appendix 1] A spectroscopic analysis device comprising:
   an irradiator configured to irradiate irradiation light on an object to be measured;
   a light receiver configured to receive reflected light based on the irradiation light from the object to be measured; and
   a controller configured to analyze, based on the reflected light, an optical property of the object to be measured, wherein
   the controller is configured to acquire environment information on a measurement environment, including an observation window that guides the irradiation light to the object to be measured, and to correct a parameter indicating the optical property according to the environment information.
[Appendix 2] The spectroscopic analysis device according to appendix 1, wherein the controller is configured to construct a conversion model to correct the parameter in the measurement environment to a parameter in a standard environment without the observation window.
[Appendix 3] The spectroscopic analysis device according to appendix 2, wherein the controller is configured to construct the conversion model using at least one standard material.
[Appendix 4] The spectroscopic analysis device according to appendix 3, wherein the controller is configured to construct the conversion model using three or more standard materials that have different optical properties from each other.
[Appendix 5] The spectroscopic analysis device according to appendix 3 or 4, wherein the controller is configured to construct the conversion model as a regression model, taking the parameter of the standard material in the measurement environment as an explanatory variable and the parameter of the standard material in the standard environment as an objective variable.
[Appendix 6] The spectroscopic analysis device according to any one of appendices 2 to 5, wherein the controller is configured to determine a correction coefficient according to the environment information in constructing the conversion model.
[Appendix 7] The spectroscopic analysis device according to any one of appendices 2 to 6, wherein the controller is configured to correct the parameter of the object to be measured by referring to the conversion model associated with the observation window from among conversion models constructed for each type of the observation window.
[Appendix 8] The spectroscopic analysis device according to any one of appendices 2 to 7, wherein when evaluating the conversion model, the controller is configured to notify a user to update the conversion model upon determining that an evaluation index of the conversion model has reached a threshold.
[Appendix 9] The spectroscopic analysis device according to appendix 8, wherein the controller is configured to execute processing to update the conversion model.
[Appendix 10] A spectroscopic analysis method comprising:
   irradiating irradiation light on an object to be measured;
   receiving reflected light based on the irradiation light from the object to be measured; and
   analyzing, based on the reflected light, an optical property of the object to be measured, wherein
   in the analyzing of the optical property, a parameter indicating the optical property is corrected according to environment information on a measurement environment including an observation window that guides the irradiation light to the object to be measured.

## Claims

1. A spectroscopic analysis device comprising:
an irradiator configured to irradiate irradiation light on an object to be measured;
a light receiver configured to receive reflected light based on the irradiation light from the object to be measured; and
a controller configured to analyze, based on the reflected light, an optical property of the object to be measured, wherein
the controller is configured to acquire environment information on a measurement environment, including an observation window that guides the irradiation light to the object to be measured, and to correct a parameter indicating the optical property according to the environment information.

2. The spectroscopic analysis device according to claim 1, wherein the controller is configured to construct a conversion model to correct the parameter in the measurement environment to a parameter in a standard environment without the observation window.

3. The spectroscopic analysis device according to claim 2, wherein the controller is configured to construct the conversion model using at least one standard material.

4. The spectroscopic analysis device according to claim 3, wherein the controller is configured to construct the conversion model using three or more standard materials that have different optical properties from each other.

5. The spectroscopic analysis device according to claim 3 or 4, wherein the controller is configured to construct the conversion model as a regression model, taking the parameter of the standard material in the measurement environment as an explanatory variable and the parameter of the standard material in the standard environment as an objective variable.

6. The spectroscopic analysis device according to any one of claims 2 to 4, wherein the controller is configured to determine a correction coefficient according to the environment information in constructing the conversion model.

7. The spectroscopic analysis device according to any one of claims 2 to 4, wherein the controller is configured to correct the parameter of the object to be measured by referring to the conversion model associated with the observation window from among conversion models constructed for each type of the observation window.

8. The spectroscopic analysis device according to any one of claims 2 to 4, wherein when evaluating the conversion model, the controller is configured to notify a user to update the conversion model upon determining that an evaluation index of the conversion model has reached a threshold.

9. The spectroscopic analysis device according to claim 8, wherein the controller is configured to execute processing to update the conversion model.

10. A spectroscopic analysis method comprising:
irradiating irradiation light on an object to be measured;
receiving reflected light based on the irradiation light from the object to be measured; and
analyzing, based on the reflected light, an optical property of the object to be measured, wherein
in the analyzing of the optical property, a parameter indicating the optical property is corrected according to environment information on a measurement environment including an observation window that guides the irradiation light to the object to be measured.
